# EUROPEAN PATENT APPLICATION

(11) **EP 4 545 616 A1**
(43) Date of publication of application: **30.04.2025**
(21) Application number: 23206138.2
(22) Date of filing: 26.10.2023
(51) Int. Cl.: C09J 133/14, C09J 135/02, C09J 9/02

(54) **ELECTRICALLY CONDUCTIVE ADHESIVE**

(71) Applicant: Henkel AG & Co. KGaA, 40589 Düsseldorf (DE)
(72) Inventor: Buckland, Daniel, 40591 Düsseldorf (DE); Estruga Ortiga, Marc, 40597 Düsseldorf (DE); Smaniotto, Fabio, 40789 Monheim am Rhein (DE); Koehler, Theresia, 53757 Sankt Augustin (DE); Nitsche, Tobias, 40597 Düsseldorf (DE)

(57) **Abstract**

The present invention relates to an electrically conductive adhesive for attaching solar cells together in a shingled photovoltaic module or in a ribbon-attached photovoltaic module, wherein the adhesive provides the required viscosity, adhesion and electrical conductivity, with low silver quantity.

## Description

### Technical field

The present invention relates to an electrically conductive adhesive for attaching solar cells together in a shingled photovoltaic module or in a ribbon-attached photovoltaic module, wherein the adhesive provides the required viscosity, adhesion and electrical conductivity, with low silver quantity.

### Background

A solar cell or photovoltaic cell, is an electrical device that converts the energy of light directly into electricity by the photovoltaic effect. Solar cells are the building blocks of the photovoltaic modules, otherwise known as solar panels, in order to increase the voltage delivered by individual solar cells.

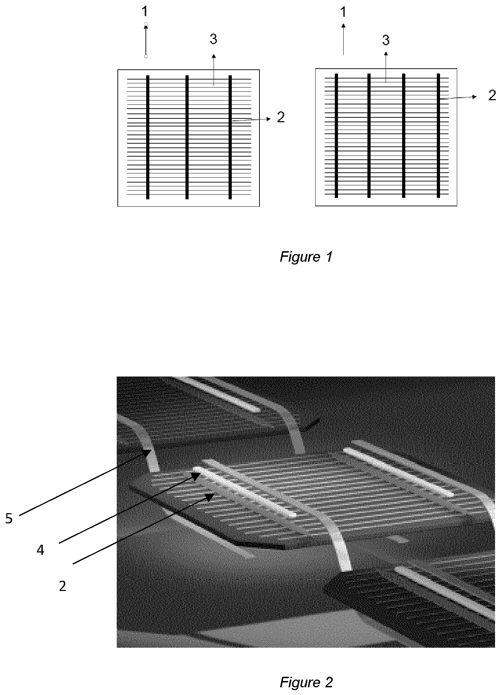

The general structure of a solar cell is illustrated in figure 1. Most of the solar cells (1) produced today consist of crystalline silicon. Metal contacts, busbars (2) and fingers (3), are both printed on the silicon wafer. These metallic contacts are necessary to collect the current generated by a solar cell. Figure 1a illustrates basic configuration with three busbars and figure 1b illustrates basic configuration with four busbars. Fingers are linear areas of metallization that collect current to deliver it to the busbars, which are connected directly to the external leads, via ribbons (5) for example. A ribbon-attached solar cell, including ribbons (5) is illustrated in figure 2. In a ribbon-attached photovoltaic module, a high temperature firing pastes are used as finger and busbar material, and the ribbons (5) are attached by means of a soldering process. In addition to soldering, electrically conductive adhesives (4) can be used to bond heat sensitive heterojunction crystalline cells (with a-Si layer present). The ribbons are on top of the bus bars in the ribbon-attached photovoltaic module and cause a shadow area to the solar cell leading to decrease the efficiency of the photovoltaic module.

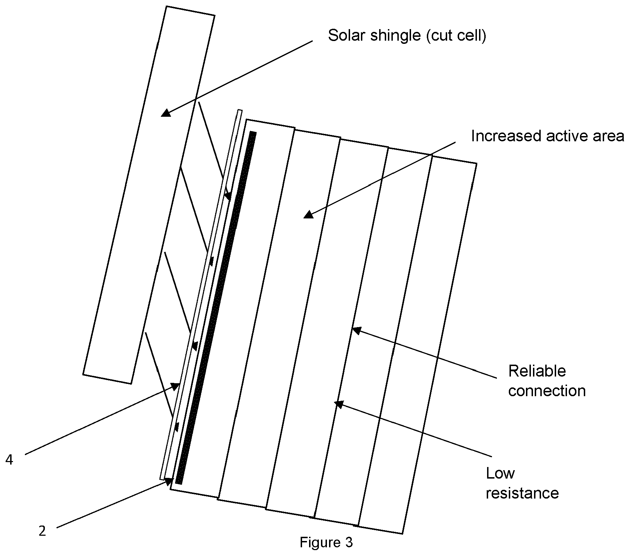

In order to increase the power output of the conventional photovoltaic modules, solar cells can be arranged in series-connected in an overlapping shingle pattern. Shingles are typically made by cutting/dicing crystalline silicon cells along a plurality of lines parallel to a long edge of each wafer to form a plurality of rectangular silicon solar cells each having substantially the same length along its long axis. In this way more shingles (typically 5 or 6 for a six-inch wafer (approx. 156 mm)) are cut/diced from the originally printed cell. The cells can be full square as well as pseudo-square, in the latter cut-cells with chamfered corners may be obtained. The first and second silicon solar cells are bonded to each other at the overlapping portions of the solar cells with an electrically conductive material (4) in shingle structure. The conductive material can be deposited in different patterns. Electrically conductive adhesive as a material to bond the solar cells together have the advantage that they overcome mechanical stresses, which build up due to CTE (coefficient of thermal expansion) mismatch between the different materials used in a photovoltaic assembly. Figure 3 illustrates a shingled photovoltaic module.

Prior art describes various different kind of electrically conductive adhesives, which can be used in solar cells and to form photovoltaic modules. Many of these electrically conductive adhesives are epoxy or silicone based adhesives. However, a long curing time is often required for some adhesives described in the prior art before the adhesive reaches its full mechanical and electrical properties.

The photovoltaic modules are subjected to a temperature changes and high mechanical stresses over their life cycle. These factors have a negative effect on the lifetime of the photovoltaic module, and also set requirements for the electrically conductive adhesive used in the solar cells and/or photovoltaic cells.

One other limitation described in prior art is that the adhesives may not have the required thermo-mechanical properties. Required thermal-elastic properties for the electrically conductive adhesive composition are correct modulus, specified glass transition temperature, and specified coefficient of thermal expansion in order to pass the thermo-mechanical load reliability test designed for the photovoltaic modules. If the adhesive material is too rigid (too high modulus) the power output loss of the photovoltaic module may occur when applying external stresses to the module (eg. after application of mechanical load or after thermal cycling).

Therefore, there is still a need for a low cost electrically conductive adhesive composition, which has excellent long-term adhesion, in particular, if such components and/or substrates will undergo temperature changes during their life cycle.

### Short description of the figures

Figure 1 illustrates a structure of ordinary silicon solar cells.
Figure 2 illustrates a ribbon-attached photovoltaic module.
Figure 3 illustrates a shingled photovoltaic module.

### Summary of the invention

The present invention relates to an electrically conductive composition comprising a) an epoxy (meth)acrylate oligomer; b) an urethane (meth)acrylate oligomer; c) a monofunctional (meth)acrylate monomer; d) a difunctional (meth)acrylate monomer; e) silver flake particles; f) silver coated glass particles; and d) a curing agent.

The present invention also encompasses a cured product of the electrically conductive composition according to the present invention.

The present invention also relates to use of the electrically conductive composition according to the present invention or use of the cured product according to the present invention in a shingled photovoltaic module and a ribbon-attached photovoltaic modules.

The present invention also relates to a photovoltaic module, comprising a series-connected string of two or more solar cells in a shingle pattern having an electrically conductive bonding between said two or more solar cells, or ribbon-attached pattern having an electrically conductive bonding between the ribbon and solar cells, wherein the electrically conductive bonding is formed with an electrically conductive composition according to the present invention.

### Detailed description of the invention

In the following passages the present invention is described in more detail. Each aspect so described may be combined with any other aspect or aspects unless clearly indicated to the contrary. In particular, any feature indicated as being preferred or advantageous may be combined with any other feature or features indicated as being preferred or advantageous.

In the context of the present invention, the terms used are to be construed in accordance with the following definitions, unless a context dictates otherwise.

As used herein, the singular forms "a", "an" and "the" include both singular and plural referents unless the context clearly dictates otherwise.

The terms "comprising", "comprises" and "comprised of" as used herein are synonymous with "including", "includes" or "containing", "contains", and are inclusive or open-ended and do not exclude additional, non-recited members, elements or method steps.

As used herein, the term "*consisting of*" excludes any element, ingredient, member or method step not specified.

The words "*preferred*", "*preferably*", "*desirably*" and "*particularly*" are used frequently herein to refer to embodiments of the disclosure that may afford particular benefits, under certain circumstances. However, the recitation of one or more preferable, preferred, desirable or particular embodiments does not imply that other embodiments are not useful and is not intended to exclude those other embodiments from the scope of the disclosure.

As used throughout this application, the word "*may*" is used in a permissive sense - that is meaning to have the potential to - rather than in the mandatory sense.

The recitation of numerical end points includes all numbers and fractions subsumed within the respective ranges, as well as the recited end points.

All percentages, parts, proportions and then like mentioned herein are based on weight unless otherwise indicated.

When an amount, a concentration or other values or parameters is/are expressed in form of a range, a preferable range, or a preferable upper limit value and a preferable lower limit value, it should be understood as that any ranges obtained by combining any upper limit or preferable value with any lower limit or preferable value are specifically disclosed, without considering whether the obtained ranges are clearly mentioned in the context.

All references cited in the present specification are hereby incorporated by reference in their entirety.

Unless otherwise defined, all terms used in disclosing the invention, including technical and scientific terms, have the meaning as commonly understood by one of the ordinary skill in the art to which this invention belongs to. By means of further guidance, term definitions are included to better appreciate the teaching of the present invention.

In the following text the term (meth)acrylate covers both acrylate and methacrylate.

The present invention relates to an electrically conductive composition comprising a) an epoxy (meth)acrylate oligomer; b) an urethane (meth)acrylate oligomer; c) a monofunctional (meth)acrylate monomer; d) a difunctional (meth)acrylate monomer; e) silver flake particles; f) silver coated glass particles; and d) a curing agent.

Surprisingly, the Applicant has discovered that the electrically conductive composition according to the present invention provides fast curing, stress release, long term bonding strength to metal part of the silicon solar cells, reliable connection and low electrical contact resistance to the metal parts of the solar cell despite of low silver quantity.

The Applicant has found out that the flexibility of the adhesive can be modified even further by reducing the quantity of the selected electrically conductive fillers and to increase the quantity of the selected oligomers. The composition according to the present invention is able to overcome the accumulated mechanical stresses in the photovoltaic modules. Furthermore, selected combination of electrically conductive fillers having low silver content do not have pot life issues when used in free radical cure acrylic formulations.

The electrically conductive composition according to the present invention comprises an epoxy (meth)acrylate oligomer and an urethane (meth)acrylate oligomer to form a resin matrix.

The combination of an epoxy (meth)acrylate oligomer and an urethane (meth)acrylate oligomer has the advantage that they provide required rigidity while being also flexible.

Suitable epoxy (meth)acrylate oligomer for use in the present invention is preferably selected from the group consisting of bisphenol A phenoxy acrylate oligomer, fatty acid modified epoxy acrylate, novolac epoxy acrylate, aliphatic epoxy acrylate, and mixtures thereof, preferably the epoxy (meth)acrylate oligomer is bisphenol A phenoxy acrylate oligomer.

Suitable commercially available epoxy (meth)acrylate oligomers for use in the present invention include, but are not limited to CN104, CN131B/CN, CN132 and CN159 from Arkema and Genomer 2259 from Rahn.

The epoxy (meth)acrylate oligomer may be present from 0.1 to 5% by weight of the total weight of the composition, preferably from 0.2 to 3%, and more preferably from 0.5 to 1.5%

Suitable urethane (meth)acrylate oligomer for use in the present invention is preferably an aliphatic or aromatic urethane (meth)acrylate oligomer, more preferably an aliphatic urethane (meth)acrylate oligomer and even more preferably an aliphatic urethane di(meth)acrylate oligomer.

Suitable commercially available urethane (meth)acrylate oligomers for use in the present invention include but are not limited to CN966H90 and CN1964 from Arkema.

Urethane acrylates, and especially aliphatic urethane di(meth)acrylates are preferred because they have low Tg value, preferably Tg less than 15°C, and they can provide the desired flexibility to the composition.

Glass Transition Temperature (Tg, °C): The glass transition temperature is the onset temperature at which the cured resin changes from a glassy (solid) state to a soft, rubbery state: it can be considered the point at which a measurable reduction in physical properties occurs resulting from exposure to elevated temperatures. Herein the glass transition temperature is determined by dynamic mechanical thermal analysis (DMTA) using a TA Instruments Q800 DMA. Cured samples of the compositions - having dimensions of length 15.0 mm, width 5.0 mm and thickness 0.25 mm - were evaluated at a temperature range between -20 °C and 200 °C at a heating rate of 2 K/min. A oscillatory force having a frequency of 1 Hz was applied at a controlled strain (0.1%) to yield measures of stiffness and damping, reported as storage modulus (E') and tan delta (tan δ). The glass transition (Tg) is observed as a large drop in the storage modulus (E') when viewed on a log scale against a linear temperature scale: a concurrent peak in the tan delta (tan δ) is also seen.

The urethane (meth)acrylate oligomer may be present from 8 to 20% by weight of the total weight of the composition, preferably from 10 to 18%, and more preferably from 12 to 15%.

If the combined quantity of the epoxy (meth)acrylate oligomer and urethane (meth)acrylate oligomer is too high, the resulting composition may result in a very low filled formulation regarding electrically conductive filler, and conductivity properties may be negatively affected. On the other hand, too low epoxy (meth)acrylate oligomer quantity may not provide required adhesion strength and this may also compromise damp heat reliability.

However, the adhesive cannot be too flexible, because stable electrical contacts to a solar cell are difficult to maintain. Therefore, the formed contacts need to be flexible enough but having some rigidity to provide stability to the structure. Furthermore, it is known that the contact resistance of the adhesive to the solar cell tends to increase during thermocycling between -40°C and 85°C and/or during ageing at 85°C in high humidity environments (85% humidity). This is causing power output of modules to decrease during these reliability conditions. Therefore, it is important to provide adhesive having desired flexibility.

The electrically conductive composition according to the present invention comprises a monofunctional (meth)acrylate monomer and a difunctional (meth)acrylate monomer. These mono - and difunctional (meth)acrylate monomers act as a reactive diluent.

Suitable monofunctional (meth)acrylate monomer for use in the present invention is preferably selected from the group consisting of isobornyl acrylate, isobornyl methacrylate, 2-(2-ethoxyethoxy) ethylacrylate, lauryl acrylate, lauryl methacrylate, acrylic acid ester, cyclic trimethylolpropane formal acrylate, 4-tert-butylcyclohexylacrylate, 2-phenoxyethylacylate, 2-phenoxyethylmethacrylate, tetrahydrofurfuryl acrylate, 3,3,5-trimethylcyclohexyl acrylate and mixtures thereof, preferably the monofunctional meth)acrylate monomer is isobornyl acrylate.

These monofunctional (meth)acrylate monomers are preferred because they have good diluting properties and good compatibility with the composition according to the present invention. Particularly, isobornyl methacrylate is preferred because it has ideal diluting properties for the composition according to the present invention.

Suitable commercially available monofunctional (meth)acrylate monomers for use in the present invention include, but are not limited to SR256, SR489, SR395, SR440, SR335, SR285, SR423D, SR550 from Arkema; Miramer M170, M1084 from Miwon Specialty Chemical Co., Ltd., IBXA from Osaka Organic Chemical Ind.; Genomer 121, Genomer 121M from Rahn; and IBOA from Osaka Organic Chemical ltd.

The monofunctional (meth)acrylate monomer may be present from 5 to 25% by weight of the total weight of the composition, preferably from 7 to 20%, and more preferably from 8 to 12%.

Suitable difunctional (meth)acrylate monomer for use in the present invention is preferably selected from the group consisting of 1,6-hexanediol diacrylate, neopentyl glycolpropoxylate diacrylate, polyethylene glycol 400 diacrylate, tetra(ethylene glycol) diacrylate, tripropyleneglycol diacrylate, hydroxyl pivalic neopentyl glycol diacrylate, tricyclodecane dimethanol diacrylate, tricyclodecanedimethanol diacrylate and mixtures thereof, preferably the difunctional (meth)acrylate monomer is tricyclodecanedimethanol diacrylate.

These difunctional (meth)acrylate monomers are preferred because they have good diluting properties and good compatibility with the composition according to the present invention. Tricyclodecanedimethanol diacrylate is particularly preferred due its hydrophobicity and stability in damp heat.

Suitable commercially available difunctional (meth)acrylate monomers for use in the present invention include, but are not limited to SR238, SR833S, SR834, SR355, SR 285, SR 248, SR 259, SR 9003 and SR494 from Arkema; and Miramer M202, M220, M222, M232 from Miwon Specialty Chemical Co. Ltd.

The difunctional (meth)acrylate monomer may be present from 4 to 12% by weight of the total weight of the composition, preferably from 6 to 10%, and more preferably from 7 to 9%.

If the quantity of the combined monofunctional (meth)acrylate monomer and difunctional (meth)acrylate monomer is less than 9% there may not be a physical effect to the composition. On the other hand, if the quantity exceeds 37% the composition may be adversely affected: there may be out gassing, bleeding, and the viscosity of the composition may not be ideal. Further, too high monofunctional (meth)acrylate monomer quantity may lead shorter chains and decreased crosslinking, whereas too high quantity may compromise electrical performance.

The composition according to the present invention may further comprise trifunctional (meth)acrylate monomer and/or a tetrafunctional (meth)acrylate monomer. These tri - and tetrafunctional

(meth)acrylate monomers act also as a reactive diluent. Due to their high functionality, they provide higher cross-linking density and lead to an improved electrical performance and improved reliability performance.

Suitable trifunctional (meth)acrylate monomer and tetrafunctional (meth)acrylate monomer for use in the present invention may be selected from the group consisting of trimethyl propane triacrylate, trimethylol propane (EO)s triacrylate, trimethylol propane (EO)₉ triacrylate, pentaerythritol triacrylate, pentaerythritol tetraacrylate, di-trimethylolpropane triacrylate, ethoxylated pentaerythritol tetraacrylate, neopentyl glycolpropoxylate diacrylate, polyethylene glycol 400 diacrylate, tetra(ethylene glycol) diacrylate, tripropyleneglycol diacrylate, hydroxyl pivalic neopentyl glycol diacrylate, tricyclodecane dimethanol diacrylate and mixtures thereof, preferably trifunctional (meth)acrylate monomer and tetrafunctional (meth)acrylate monomer is selected from the group consisting of pentaerythritol triacrylate, pentaerythritol tetraacrylate, and mixtures thereof.

The above listed trifunctional (meth)acrylate monomers and tetrafunctional (meth)acrylate monomers are preferred because they provide good compatibility with the system and improve electrical and reliability performance.

Suitable commercially available trifunctional (meth)acrylate monomer and tetrafunctional (meth)acrylate monomer for use in the present invention include but are not limited to SR444F and SR295 from Arkema.

The trifunctional (meth)acrylate monomer and/or tetrafunctional (meth)acrylate monomer may be present from 1 to 30% by weight of the total weight of the composition, preferably from 3 to 28%, and more preferably from 4 to 27%.

If the quantity of trifunctional (meth)acrylate monomer and tetrafunctional (meth)acrylate monomer is too low this may not lead to required crosslinking density, whereas too high quantity may lead to too high crosslinking density and therefore, the composition may become too rigid and even brittle.

The electrically conductive composition according to the present invention comprises silver flake particles and silver coated glass particles acting as electrically conductive fillers.

The Applicant has found out that by combining silver flake particles and silver coated glass particles, the overall quantity of the electrically conductive particles may be low, while the silver quantity in the composition can be reduced remarkably while maintaining required electrical properties, such as contact resistance.

Silver flake particles are preferred and used because of their good electrical performance, and they provide improved volume packing and thus lower weight fractions are needed to reach percolation.

Suitable silver flake particles for use in the present invention have preferably an average particle size in the range of from 800nm to 50µm, preferably from 1nm to 40µm, and more preferable from 1µm to 35µm.

Suitable commercially available silver flake particles for use in the present invention include, but are not limited to silver: AA3462, AA-5124, AA-192N, C-1284P, C-0083P, P543-14 from Metalor; KP84X, KP74, KP29 from Ames Goldsmith.

The silver flake particles may be present from 5 to 50% by weight of the total weight of the composition, preferably from 5 to 35, more preferably from 6 to 25%, more preferably from 7 to 15%, and even more preferably from 8 to 13%.

The above silver flake particle quantities are preferred because too low quantities, such as below 5% may not result in synergistic effect with the spherical particles, whereas too high quantities may lead to rheology issues.

Silver coated glass particles are used and preferred because of their lower cost (compared to silver).

Suitable silver coated glass particles for use in the present invention can exist in a variety of shapes, e.g., as substantially spherical particles, as irregular shaped particles, oblong particles, flakes (e.g., thin, flat, single crystal flakes), and the like. The silver coated glass particles are preferably a mixture of spherical particles and flake particles.

The silver quantity in the silver coated glass particles may be from 10 to 70% by weight of the total weight of the silver coated particles, preferably from 20 to 60%, and more preferably from 25 to 50%.

If the silver quantity in the silver coated glass particles is less than 10% this may lead to connectivity issued, whereas higher than 70% would not necessarily provide the benefit on cost side.

Suitable silver coated glass particle for use in the present invention have preferably an average particle size in the range of from 300nm to 50µm, preferably from 500nm to 40µm, and more preferable from 800nm to 35µm.

Suitable commercially available silver coated glass particles for use in the present invention include, but is not limited to CONDUCT-O-FIL^{™} SG15F35 from Potters Industries Inc.

The silver coated glass particles may be present from 35 to 55% by weight of the total weight of the composition, preferably from 40 to 50%, and more preferably from 43 to 49%.

If the quantity of the silver coated glass particles is less than 35% percolation threshold may not be achieved, whereas too high quantities may lead to rheology problems due to high-volume fraction.

Preferably, silver flake particles and silver coated glass particles have a tap density from 0.7 g/cm³ to 6.0 g/cm³, preferably from 1.0 g/cm³ to 5.5 g/cm³, more preferably from 1.0 g/cm³ to 4.0 g/cm³.

The tap density is determined in accordance to ISO 3953 typically using a 25 cm³ graduated glass cylinder. The principle of the method specified is tapping a specified amount of powder in a container by means of a tapping apparatus until no further decrease in the volume of the powder takes place. The mass of the powder divided by its volume after the test gives its tap density.

As used above, the term "particle size" in context with thermally conductive fillers refers to the D₅₀ value of the cumulative volume distribution curve at which 50% by volume of the particles have a diameter less than said value. The average particle size is measured in the present invention through laser diffractometry preferably using Microtrac S3000/S3500 available from Microtrac MRB. In this technique, the size of particles in suspensions or emulsions is measured using the diffraction of a laser beam, based on application of Mie theory. In the present invention, Mie theory or a modified Mie theory for non-spherical particles is applied and the particle sizes relate to scattering measurements at an angle from 0.02 to 135 degrees relative to the incident laser beam.

The combination of low quantity of the selected electrically conductive fillers, selected oligomers and acrylate monomer mixture as described in the present invention have a key role to lead good electrical properties and good adhesion properties, in addition to good application properties. At the same time low silver quantity reduces the overall costs.

The Applicant has surprisingly found out that the combination of an epoxy (meth)acrylate oligomer, aliphatic urethane di(meth)acrylate oligomer, (meth)acrylate monomer mixture and low silver content electrically conductive filler quantity works well together to provide low electrical contact resistance to metal parts of silicon solar cell, stress release, long term bonding strength to metal part of silicon solar cells and fast curing.

The electrically conductive composition according to the present invention comprises a curing agent.

Any conventional curing agent suitable for (meth)acrylate resins can be used in the present invention. Examples of suitable curing agents for use in the present invention are peroxides and azo compounds. Preferably, the curing agent used in the present invention is a peroxide.

Suitable peroxide for use in the present invention is selected from the group consisting of tert-butyl peroxy 2-ethylhexanoate, di-tert-butyl peroxide, tert-butyl peroxybenzoate, tert-butyl peroxyneodecanoate, 2,5-dimethyl-2,5(tert-butyl peroxy) hexane, dicumyl peroxide, tert-amyl-peroxyneodecanoate di(4-tert-butylcyclohexyl)peroxydicarbonate, di-sec-butyl peroxydicarbonate, diisopropyl peroxydicarbonate, di(2-ethylhexyl)peroxydicarbonate, dicetyl peroxydicarbonate, dimyristyl peroxydicarbonate) and mixtures thereof.

Tert-butyl peroxyneodecanoate is one preferred peroxide because it has good compatibility with the composition, and it provides ideal fast curing speed.

Suitable commercially available peroxides for use in the present invention include, but are not limited to Luperox 10, Luperox 26, Luperox DI, Luperox P and dicumyl peroxide from Arkema; and Trigonox 101 from AzkoNobel.

An electrically conductive composition according to the present invention comprises a peroxide from 0.1 to 3% by weight of the total weight of the composition, preferably from 0.2 to 2%.

An electrically conductive composition according to the present invention may further comprise an adhesion promoter.

Suitable adhesion promoter for use in the present invention is selected from the group consisting of epoxy functional silanes, (meth)acrylic functional silanes, carboxylates, acid functional (meth)acrylates (acrylic acid, methacrylic acid, methacryloxyethyl succinates, methacryloyloxyethyl maleates), and mixtures thereof.

Suitable commercially available adhesion promotors for use in the present invention include, but are not limited to Silquest A-187, Silquest A-1100, Silquest A-1106, Silquest A-1110, Silquest A1120, Silquest A1 130, Silquest A-1170, Silquest A2120, Silquest A-174 (acrylic functional silane) and Silquest A-186 from Momentive; and BYK 4509, 4510, 4511, 4512 from Altana.

An electrically conductive composition according to the present invention may comprise an adhesion promoter from 0.01 to 10% by weight of the total weight of the composition, preferably from 0.05 to 5%, and more preferably from 0.1 to 3.5%.

If the quantity of an adhesion promoter exceeds 10% other properties of the composition will be negatively affected, leading to decreased adhesion strength, and decreased electrical conductivity.

An electrically conductive composition according to the present invention may further comprise rheological additives such as bentone (such as Bentone 27, Bentone 38 and Bentone SD-2 from Elemenits Specialities), silica, fumed silica (such as Aerosil R805, Aerosil 200, Aerosil 300, Aerosil COK 84, Aerosil R711 and Aerosil R7200 from Evonik), fused silica (such as FB-5SDC, FB-7SDC, and FB-9454 from DENKA) and aluminium oxide (such as AE 9104 from Admatechs Co., LTD and Aeroxide Alu C, Aeroxide Alu 130 and Aeroxide Alu 65 from Evonik), carbon nanostructures (Athlos CNS from Cabot), graphite and carbon black.

An electrically conductive composition according to the present invention may further comprise wetting and dispersing agents such as BYK W903 from Altana.

An electrically conductive composition according to the present invention may further comprise rheology additives such as BYK-411, BYK E-411, BYK-430, BYK-430, BYK-431 and BYK-R605 from Altana; and Thixatrol P220X-MF, Thixatrol Plus, and Thixatrol PM 8054 From Elementis.

An electrically conductive composition according to the present invention may further comprise a radical stabilizer such as BHT (butylated hydroxytoluene) or alternative radical stabilizers such as Genorad 16, Genorad 18, Genorad 21 and Genorad 22 from Rahn.

An electrically conductive composition according to the present invention may be applied by using any of the following techniques time pressure dispense, jet dispense, auger dispense, stencil printing and screen printing.

The viscosity of the electrically conductive composition according to the present invention needs to be adjusted to be suitable for the selected application method. Generally, viscosity tolerated for stencil or screen printing may be slightly higher than viscosity needed in dispensing method. Optimizing rheology to make it suitable for the targeted application can be done by slightly increasing/decreasing the quantity of the acrylate monomers or by using small quantities of rheological additives.

In a highly preferred embodiment, the viscosity is from 23 to 33 Pa.s.

If viscosity is too high, (a viscosity at 25°C above 100 Pa.s or 100,000 cPoise as measured by rheometer at 15s-1), the application of the electrically conductive adhesive in a high speed process will become problematic.

The present invention relates to a cured product of the electrically conductive composition according to the present invention. The composition according to the present invention may be cured thermally.

The electrically conductive adhesive according to the present invention having the required electrical and mechanical properties can be used in a shingled or ribbon-attached photovoltaic module wherein the crystalline silicon based solar singles are attached to each other by using the electrically conductive adhesive.

The present invention encompasses the use of the electrically conductive composition according to the present invention in a shingled photovoltaic module and a ribbon-attached photovoltaic modules.

The present invention encompasses the use of cured electrically conductive composition according to the present invention in a shingled photovoltaic module and a ribbon-attached photovoltaic modules.

In a preferred embodiment, the electrically conductive composition according to the present invention is used as an interconnection material in the photovoltaic module, wherein the solar cells are shingled. A shingled structure is illustrated in figure 3.

In another preferred embodiment, the electrically conductive composition according to the present invention may be used to bond ribbons to the solar cells as shown in figure 2.

The present invention also relates to a photovoltaic module, comprising a series-connected string of two or more solar cells in a shingle pattern having an electrically conductive bonding between said two or more solar cells or in a ribbon-attached pattern having an electrically conductive bonding between the ribbon and solar cells, wherein said electrically conductive bonding is formed with an electrically conductive composition according to the present invention. Shingle structure is illustrated in figure 3 and ribbon-attached structure in figure 2.

The electrically conductive composition according to the present invention can be applied by dispensing, jetting or printing to solar cells.

### Examples

The example compositions are prepared by mixing all ingredients together to form a homogenous mixture. All ingredients and quantities are listed in table 1.

### Test methods:

*Viscosity* was measured on a Rheometer from TA instruments Rheometer HR-1 or Q-2000 using a plate-plate geometry with a 2 cm in diameter plate at a 200 micron gap and shear rates of 1.5 s-1 or 15 s-1. Viscosity units are reported in Pa.s.

*Volume resistivity (VR)* was measured as follows:
Samples were prepared for the compositions according to the examples above and deposited on a glass plate (by drawing down a strip of material onto the surface of a glass slide with strip dimensions of about 5 cm in length, 5 mm in width and about 50 micron in thickness) and cured and dried (according to the requirement for the used resin). Glass plates were cooled to room temperature, before measurement.
Volume resistivity was calculated from equation VR = (width of the sample (cm) x thickness of the sample (cm) x Resistance (Ohm)) / length of the sample (cm). Where the resistance in ohm was measured by using a Keithley 2010 multimeter and a 2 point resistance probe. Volume resistivity units are reported in Ohm.cm

### Electrical contact resistance (CR)

The electrical contact resistance was determined by dispensing the conductive adhesive in a TLM structure on a 1.5 mm wide busbar of a c-Si wafer. A TLM structure was obtained by contacting 7 Ag plated Cu tabs (2 mm wide, 1 micron Ag coating) to the test layer, wherein the contact tabs exhibit increasing distances between the contact tabs going from about 3 mm to about 18 mm. The resistance between the neighbouring contact tabs was measured by using Keithley four-point probes and a Keithley 2750 multimeter and plotted as a function of the distance. The contact resistance value is the half of the intercept from the curve obtained from that plot. The average contact resistance (arithmetic average) is reported in mohm. If no linear relation could be found because of bad ohmic contacts meaning an rsq value of less than 0.9, "no fit" was mentioned.

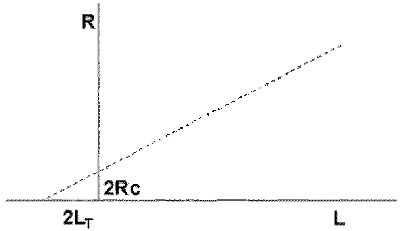

The stability of the electrical contact resistance was determined by accelerated ageing testing (85° C , relative humidity of 85% and -40,85°C thermal cycling) using the TLM test setup as described above.

DSC has been measured by using Dynamic Scanning Calorimetry Q2000 from TA Instruments. The basic principle underlying this technique is that when the sample undergoes a phase transitions, more or less heat will be needed compared to the reference to keep the reference and the sample at the same temperature. Whether less or more heat must flow to the sample depends on whether the process is exothermic or endothermic. Weight of the analysed uncured material in the sample pan is 5 to 20 mg. An open aluminium sample pan is used and sample is subjected to dynamic heating where sample is heated from room temperature to 250°C at 10°C/min heating rate under continuous nitrogen flow of 50 mL/min. This allows to follow the cure behaviour which is an exothermic reaction. Peak temperature of the exothermic reaction is reported in °C.

Dynamic mechanical analysis (DMA) is performed to measure the Storage Modulus (E-modulus) value which is the elastic response of material by using TA instruments DMA Q800 or DMA 2980. Storage Modulus units are reported in MPa.

Thin film samples with the following dimensions: width 8-10mm, length 13-15mm and thickness 150-200 micron, were measured by using Film Tension clamp. Samples were cured for 15 min at 150 or 180°C.

**Table 1**

| | (Comp Ex 1) | Ex 1 | Ex 2 | Ex 3 | Ex 4 | (Comp. Ex 2) |
|---|---|---|---|---|---|---|
| CN104 epoxy acrylate oligomer from Sartomer | | 1.08 | 1.08 | 1.08 | 1.08 | 0.91 |
| CN966H90 Urethane acrylate oligomer from Sartomer | 20.59 | 13.34 | 13.37 | 13.37 | 13.37 | 11.3 |
| SR9050 monoacrylate adhesion promoter from Sartomer | 2.13 | | | | | |
| SR238 difunctional acrylate monomer from Sartomer | 11.77 | | | | | |
| SR833S difunctional acrylate monomer from Sartomer | | 8.03 | 8.03 | 8.03 | 8.03 | 6.79 |
| Isobornyl acrlylate from IMCD | 11.77 | 16.33 | 10.16 | 10.16 | 9.71 | 13.8 |
| Silquest A-187 adhesion promoter from Momentive | 0.45 | 1.21 | 1.21 | 1.21 | 1.21 | 1.02 |
| Butylated hydroxytoluene (BHT) from TCI | 0.3 | 0.04 | 0.04 | 0.04 | 0.3 | 0.03 |
| Peroxide Luperox 10E from Sartomer | 0.84 | 0.75 | 0.75 | 0.75 | 0.63 | 0.63 |
| GR 80 methacryloxyethyl succinate adhesion promoter from Henkel | | 1.21 | 1.21 | 1.21 | 1.21 | 1.02 |
| SR444F pentaerythritol triacrylate) from Sartomer | | | 6.16 | | | |
| SR295 tetrafunctional acrylate monomer fromSartomer | | | | 6.16 | 6.16 | |
| Aerosil R 805 Fumed Silica from Evonic | | | | | 0.3 | |
| Silver flake (KP-84X) from Ames Goldsmith | 41.94 | 11.6 | 11.6 | 11.6 | 11.6 | |
| Silver powder (NX4000A) from Metalor | 2.84 | | | | | |
| Silver flake (P892-29) from Metalor | | | | | | 61.28 |
| Silver powder (K1322P) from Metalor | 7.65 | | | | | 3.22 |
| Conduct O Fil^{®} SG02S40 from Potters | | 11.6 | 11.6 | 11.6 | 11.6 | |
| Conduct O Fil^{®} SG15F35 from Potters | | 34.8 | 34.8 | 34.8 | 34.8 | |
| Sum (%) | 100 | 100 | 100 | 100 | 100 | 100 |
| Filler (%) | 52.4 | 58 | 58 | 58 | 58 | 64.5 |
| Silver (%) | 52.4 | ≈28 | ≈28 | ≈28 | ≈28 | 64.5 |
| | | | | | | |
| Volume Resistivity 20s @ 180C (ohm.cm) | 1.17E-03 | 1.40E-03 | 1.27E-03 | 1.15E-03 | 9.55E-04 | 2.10E-04 |
| Volume Resistivity 20s @ 120C (ohm.cm) | 4.27E-03 | 4.22E-03 | | | 2.48E-03 | |
| Viscosity 15s-1 (Pa.s) | 29 | 29 | 25 | 27 | 28 | 19 |
| Contact Resistance BO 15min 150C (mohm) | 7.3 | 6.9 | | | | 6.1 |

The examples according to the present invention exemplify that equivalent performance can be achieved by using a mixture of silver flakes and silver coated glass particles versus traditional silver particle filled compositions. The silver quantity is noticeably lower in the compositions according to the present invention versus traditional silver filler compositions (comparative examples) 28% vs. 58%.

## Claims

1. An electrically conductive composition comprising
a) an epoxy (meth)acrylate oligomer;
b) an urethane (meth)acrylate oligomer;
c) a monofunctional (meth)acrylate monomer;
d) a difunctional (meth)acrylate monomer;
e) silver flake particles;
f) silver coated glass particles; and
d) a curing agent.

2. An electrically conductive composition according to claim 1 or 2, wherein the epoxy (meth)acrylate oligomer is selected from the group consisting of bisphenol A phenoxy acrylate oligomer, fatty acid modified epoxy acrylate, novolac epoxy acrylate, aliphatic epoxy acrylate, and mixtures thereof, preferably the epoxy (meth)acrylate oligomer is bisphenol A phenoxy acrylate oligomer.

3. An electrically conductive composition according to claim 1 or 2, wherein the urethane (meth)acrylate oligomer, is an aliphatic or aromatic urethane (meth)acrylate oligomer, preferably an aliphatic urethane (meth)acrylate oligomer, and more preferably an aliphatic urethane di(meth)acrylate oligomer.

4. An electrically conductive composition according to any of claims 1 to 3, wherein the epoxy (meth)acrylate oligomer is present from 0.1 to 5% by weight of the total weight of the composition, preferably from 0.2 to 3%, and more preferably from 0.5 to 1.5% and wherein the urethane (meth)acrylate oligomer is present from 8 to 20% by weight of the total weight of the composition, preferably from 10 to 18%, and more preferably from 12 to 15%.

5. An electrically conductive composition according to any of claims 1 to 4, wherein the monofunctional (meth)acrylate monomer is selected from the group consisting of isobornyl acrylate, isobornyl methacrylate, 2-(2-ethoxyethoxy) ethylacrylate, lauryl acrylate, lauryl methacrylate, acrylic acid ester, cyclic trimethylolpropane formal acrylate, 4-tert-butylcyclohexylacrylate, 2-phenoxyethylacylate, 2-phenoxyethylmethacrylate, tetrahydrofurfuryl acrylate, 3,3,5-trimethylcyclohexyl acrylate and mixtures thereof, preferably the monofunctional meth)acrylate monomer is isobornyl acrylate.

6. An electrically conductive composition according to any of claims 1 to 5, wherein the difunctional (meth)acrylate monomer is selected from the group consisting of 1,6-hexanediol diacrylate, neopentyl glycolpropoxylate diacrylate, polyethylene glycol 400 diacrylate, tetra(ethylene glycol) diacrylate, tripropyleneglycol diacrylate, hydroxyl pivalic neopentyl glycol diacrylate, tricyclodecane dimethanol diacrylate, tricyclodecanedimethanol diacrylate and mixtures thereof, preferably the difunctional (meth)acrylate monomer is tricyclodecanedimethanol diacrylate.

7. An electrically conductive composition according to any of claims 1 to 6, wherein the monofunctional (meth)acrylate monomer is present from 5 to 25% by weight of the total weight of the composition, preferably from 7 to 20%, and more preferably from 8 to 12% and wherein the difunctional (meth)acrylate monomer is present from 4 to 12% by weight of the total weight of the composition, preferably from 6 to 10%, and more preferably from 7 to 9%.

8. An electrically conductive composition according to any of claims 1 to 7, wherein the silver flake particles are present from 5 to 50% by weight of the total weight of the composition, preferably from 5 to 35%, more preferably from 6 to 25%, and more preferably from 7 to 15%, and even more preferably from 8 to 13%.

9. An electrically conductive composition according to any of claims 1 to 8, wherein the silver coated glass particles are present from 35 to 55% by weight of the total weight of the composition, preferably from 40 to 50%, and more preferably from 43 to 49%.

10. An electrically conductive composition according to any of claims 1 to 9, wherein the curing agent is a peroxide preferably selected from the group consisting of tert-butyl peroxy 2-ethylhexanoate, di-tert-butyl peroxide, tert-butyl peroxybenzoate, tert-butyl peroxyneodecanoate, 2,5-dimethyl-2,5(tert-butyl peroxy) hexane, dicumyl peroxide, tert-amyl-peroxyneodecanoate di(4-tert-butylcyclohexyl)peroxydicarbonate, di-sec-butyl peroxydicarbonate, diisopropyl peroxydicarbonate, di(2-ethylhexyl)peroxydicarbonate, dicetyl peroxydicarbonate, dimyristyl peroxydicarbonate) and mixtures thereof.

11. An electrically conductive composition according to any of claims 1 to 10, wherein the curing agent is present from 0.1 to 3% by weight of the total weight of the composition, preferably from 0.2 to 1.5%.

12. A cured product of the electrically conductive composition according to any of claims 1 to 11.

13. Use of the electrically conductive composition according to any of claims 1 to 11 or use of the cured product according to claim 12 in a shingled photovoltaic module and a ribbon-attached photovoltaic modules.

14. A photovoltaic module, comprising a series-connected string of two or more solar cells in a shingle pattern having an electrically conductive bonding between said two or more solar cells, or ribbon-attached pattern having an electrically conductive bonding between the ribbon and solar cells, wherein the electrically conductive bonding is formed with an electrically conductive composition according to any of claims 1 to 11 or claim 12.

15. A photovoltaic module according to claim 14, wherein said electrically conductive composition is applied by dispensing, jetting or printing to the solar cells.
